# EUROPEAN PATENT SPECIFICATION

(11) **EP 3 077 093 B1**
(45) Date of publication and mention of the grant of the patent: **22.11.2017**
(21) Application number: 14812778.0
(22) Date of filing: 26.11.2014
(51) Int. Cl.: B01F 7/00, B01J 8/22, B01F 7/16, B01F 3/04

(54) **AGITATOR IMPELLER ARRANGEMENT**
LAUFRADANORDNUNG FÜR RÜHRER
SYSTÈME AGITATEUR AVEC PALES

(30) Priority: 04.12.2013 FI 20136218
(43) Date of publication of application: 12.10.2016
(73) Proprietor: Outotec (Finland) Oy, 02230 Espoo (FI)
(72) Inventor: STRÖMMER, Ville, FI-00260 Helsinki (FI); LEHTONEN, Markus, FI-01830 Lepsämä (FI)
(74) Representative: Papula Oy
(86) International application number: PCT/FI2014/050913
(87) International publication number: WO 2015/082761

(56) References cited:
- EP-A1- 1 776 999
- EP-A2- 0 224 459
- WO-A1-2010/043762
- CN-U- 202 778 383
- US-A- 4 548 765
- US-A1- 2004 062 144

## Description

### FIELD OF THE INVENTION

The present invention relates to an agitator impeller arrangement for dispersing gas into a slurry of solids and liquid.

### BACKGROUND OF THE INVENTION

In prior art there is known from US 4, 548, 765 an agitator impeller arrangement for dispersing gas into a slurry of solids and liquid. The arrangement comprises a rotating shaft having an upper end which is connected to a rotating means, and a free lower end. The arrangement also comprises an impeller which is connected coaxially and centrally in relation to the central axis to the lower end of the rotating shaft. The impeller has a horizontal circular hub disc which is connected centrally and horizontally to the lower end of the rotating shaft. A plurality of agitating blades are mounted radially and equally spaced to the circular hub disc.

US 4,548,765 discloses that each agitating blade comprises a lower vertical dispersion blade located below the plane of the circular hub disc parallel to the radius of the circular hub disc. The vertical dispersion blade has a straight vertical outer edge which is close to a periphery of the circular hub disc, an inner edge which is close to the shaft and a rounded edge curving with a radius between the outer edge and the inner edge. The impeller further comprises an upper vertical dispersion blade which is located above the plane of the circular hub disc and parallel to the radius of the circular hub disc. The impeller further comprises an inclined suspension blade located radially outside the periphery of the circular hub disc at a first angle in relation to the vertical direction and below the plane of the circular hub disc.

Corresponding to the impeller of US 4,548,765 there has been a commercial product marketed with a trademark OKTOP®2000. The performance characteristics of the OKTOP®2000 impeller are outstanding. It is an efficient impeller for dispersing gas in three phase system (gas, liquid and solid). The problem is that the known impeller is quite a complex structure with more than 20 parts assembled with 50 welds required to assemble the six agitating blades to the circular hub disc. Each agitating blade is assembled from four separate blade parts since the upper dispersion blade and the lower dispersion blade are separate parts welded to the circular hub disc and the inclined suspension blade outside the periphery is welded to an arm which is welded to the circular hub. The complex structure causes high manufacturing costs. A large amount of parts and welds also makes the quality control very difficult. A further problem is that the welded joints are vulnerable to fatigue cracking and corrosion.

### OBJECTIVE OF THE INVENTION

The objective of the invention is to alleviate the disadvantages mentioned above.

In particular, it is an objective of the present invention to provide an impeller arrangement with an impeller which is a simple structure with few parts and and can be manufactured without welding and has reduced manufacturing costs and improved quality.

Further, it is an objective of the present invention to provide an impeller arrangement with an impeller which has improved mixing performance and high power number.

Further, it is an objective of the present invention to provide an impeller arrangement with an impeller which has improved fatigue strength and a long lifetime.

### SUMMARY OF THE INVENTION

According to an aspect, the invention provides an agitator impeller arrangement for dispersing gas into a slurry of solids and liquid. The arrangement comprises a rotating shaft having an upper end which is connected to a rotating means, and a free lower end. The rotating shaft has a central axis. The arrangement further comprises an impeller connected coaxially and centrally in relation to the central axis to the lower end of the rotating shaft. The impeller includes a horizontal circular hub disc connected centrally and horizontally to the lower end of the rotating shaft, and a plurality of agitating blades mounted radially and equally spaced to the circular hub disc. Each agitating blade comprises a lower vertical dispersion blade located below the plane of the circular hub disc parallel to the radius of the circular hub disc, said vertical dispersion blade having a straight vertical outer edge being close to a periphery of the circular hub disc, an inner edge which is close to the axis of rotation and a rounded edge curving with a radius between the outer edge and the inner edge. Each agitating blade further comprises an upper vertical dispersion blade located above the plane of the circular hub disc and parallel to the radius of the circular hub disc. Each agitating blade further comprises an inclined suspension blade located radially outside the periphery of the circular hub disc, at a first angle in relation to the vertical direction and below the plane of the circular hub disc.

According to the invention the agitating blade is one integral piece of metal plate, the lower vertical dispersion blade, the upper vertical dispersion blade and the inclined suspension blade being bent from a single metal plate blank.

The advantage of the invention is that it provides an impeller with a simple structure and few parts. The impeller can be manufactured without welding and it has reduced manufacturing costs and improved quality. Further, the impeller has improved fatigue strength and a long lifetime.

In an embodiment of the invention, the agitating blade comprises a horizontal part located between the upper vertical dispersion blade and the lower vertical dispersion blade, and bolt holes arranged at the horizontal part for attaching the agitating blade to the circular hub disc with bolted joints.

In an embodiment of the invention, the agitating blade has an outer end and an inner end which is at a closer distance to the central axis than the outer end, the outer end and the inner end defining a length of the agitating blade. The radial distance between the central axis and the outer end defines a radius of the impeller, which radius is a half of the diameter of the impeller. The length of the agitating blade is 0,35xD with tolerance ± 0,05D.

In an embodiment of the invention, the lower vertical dispersion blade has a height measured from a lower surface of the horizontal part which height is 0,175xD with tolerance ± 0,02D, wherein D is the diameter of the impeller.

In an embodiment of the invention, the lower vertical dispersion blade has a width W which is 0,15xD with tolerance ± 0,02D, wherein D is the diameter of the impeller.

In an embodiment of the invention, the radius r of the curving rounded edge of the lower vertical dispersion blade is 0,1xD with tolerance ± 0,01D, wherein D is the diameter of the impeller.

In an embodiment of the invention, the first angle (α) of the inclined suspension blade is 45° with tolerance ± 5°.

In an embodiment of the invention, the upper vertical dispersion blade has a length corresponding to the length of the agitating blade.

In an embodiment of the invention, the upper vertical dispersion blade has a height measured from an upper surface of the horizontal part which height is 0,105xD with tolerance ± 0,01xD, wherein D is the diameter of the impeller.

In an embodiment of the invention, the upper vertical dispersion blade is at a second angle to the upper surface of the horizontal part, which second angle is 90° with tolerance ± 5°.

In an embodiment of the invention, the inclined suspension blade has a straight lower edge which at a third angle to an outer edge of the inclined suspension blade, said outer edge coinciding with the outer end of the agitating blade, and which third angle is 75° with tolerance ± 5°.

In an embodiment of the invention, the inclined suspension blade has a straight inner edge which is parallel to the outer edge.

In an embodiment of the invention, a gap is defined between the inner edge of the inclined suspension blade and the outer edge of the lower vertical dispersion blade, said gap having a width of 0,025xD with tolerance ± 0,005xD, and a closed end located at a lateral distance A which is 0,045xD with tolerance ± 0,005xD from a first trailing face of the lower vertical dispersion blade, wherein D is the diameter of the impeller.

In an embodiment of the invention, the upper vertical dispersion blade has a second trailing face and the lower vertical dispersion blade has a front face which is parallel to the second trailing face, and that the lateral distance B between the second trailing face and the front face is 0,1xD with tolerance ± 0,01xD, wherein D is the diameter of the impeller.

In an embodiment of the invention, the metal plate of the agitating blade has a thickness which is 0,01xD with tolerance 0,01xD / -0,005xD.

The impeller dimensioned according to the above-mentioned principles has improved mixing performance and high power number. In tests it has been shown that the impeller constructed with the principles of the present invention gives similar gas dispersion with same power intake compared to OKTOP®2000. Further, it gives better solids suspension with same power intake compared to OKTOP®2000. Further, due to higher power number than OKTOP®2000 it gives same mixing performance with lower tip speed. Thus, the impeller is subject to less abrasion and erosion and longer lifetime can be expected. Also current scale-up criteria of OKTOP®2000 can be utilized with the impeller of the invention.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 shows is a vertical section of a reactor in which the impeller arrangement according to one embodiment of the invention has been installed,
Figure 2 shows an axonometric view of the impeller arrangement of Figure 1 seen obliquely from above,
Figure 3 shows an axonometric view of the impeller arrangement of Figure 2 seen obliquely from below,
Figure 4 shows a plan view of the impeller arrangement of Figure 2 seen from above,
Figure 5 is an axonometric view of one agitating blade of the impeller arrangement shown in Figures 2 to 4,
Figure 6 shows a side view of the agitating blade of Figure 5,
Figure 7 shows an end view of the agitating blade of Figure 5, and
Figure 8 shows a detail E from Figure 4.

### DETAILED DESCRIPTION OF THE INVENTION

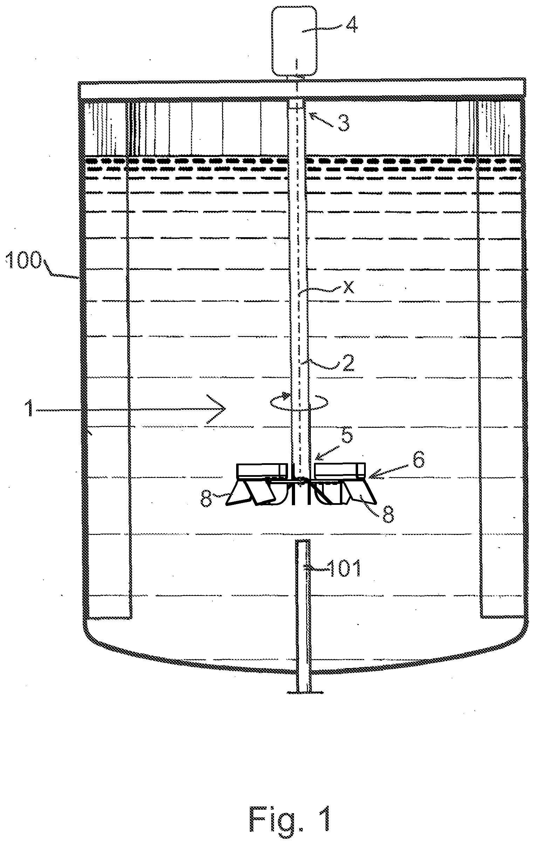

Figure 1 shows a reactor 100 which is equipped with an agitator impeller arrangement 1 and a gas inlet 101 arranged under the impeller arrangement. The impeller arrangement 1 is configured to disperse gas discharged from the gas inlet 101 effectively into small bubbles and at the same time to maintain a pulverous solid in good suspension in a liquid solution and also to produce in the gas-solid-liquid suspension a strong, suspension maintaining, turbulent flow field which is downward in the center of the reactor and upward along its sides. The operation method is similar as that disclosed in US 4,548,765.

The agitator impeller arrangement 1 comprises a rotating shaft 2 having an upper end 3 which is connected to a rotating means 4, such as an electric motor directly or via a transmission. The rotating shaft 2 has a free lower end 5. The central symmetry axis x of the shaft is vertical. An impeller 6 is connected coaxially and centrally in relation to the central axis x to the lower end 5 of the rotating shaft 2.

The impeller 6 comprises a horizontal circular hub disc 7 which is connected centrally and horizontally to the lower end 5 of the rotating shaft 2. The impeller also comprises a plurality of agitating blades 8, is the shown example six blades 8 which are mounted radially and equally spaced to the circular hub disc 7.

The new structure of the impeller 6 contains only seven parts, the circular hub disc 7 and six blades 8. In assembly welding is not required at all which reduces manufacturing costs up to 90%. Total cost of impeller is about 50 % compared to the conventional OKTOP®2000 design. The fatigue strength is very high.

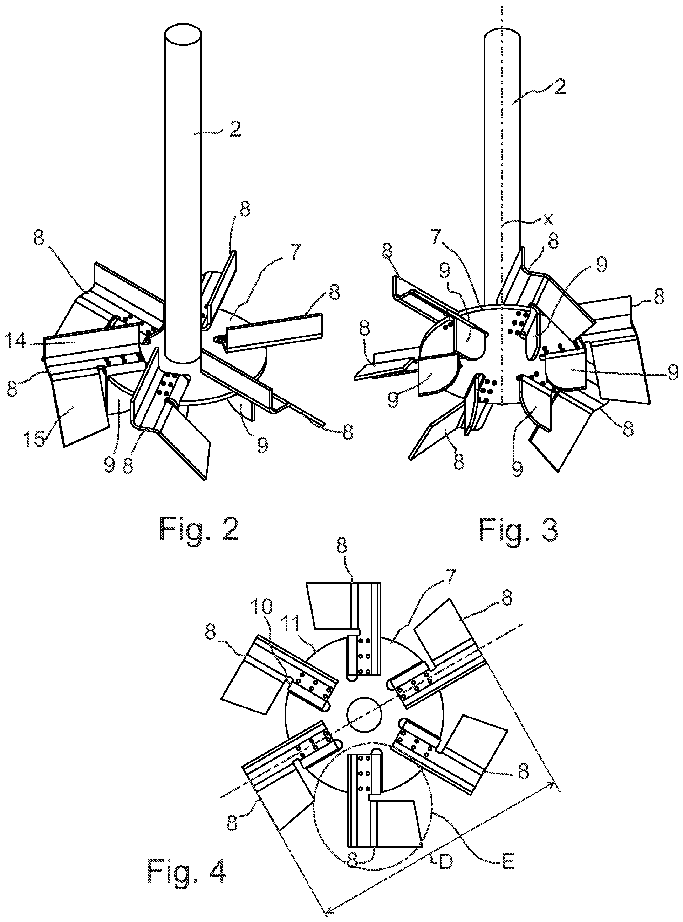

As can be seen from Figures 2 to 4, all agitating blades are identical. As best seen in Figure 3, each blade 8 comprises a lower vertical dispersion blade 9 which is located below the plane of the horizontal circular hub disc 7 and parallel to the radius of the circular hub disc 7.

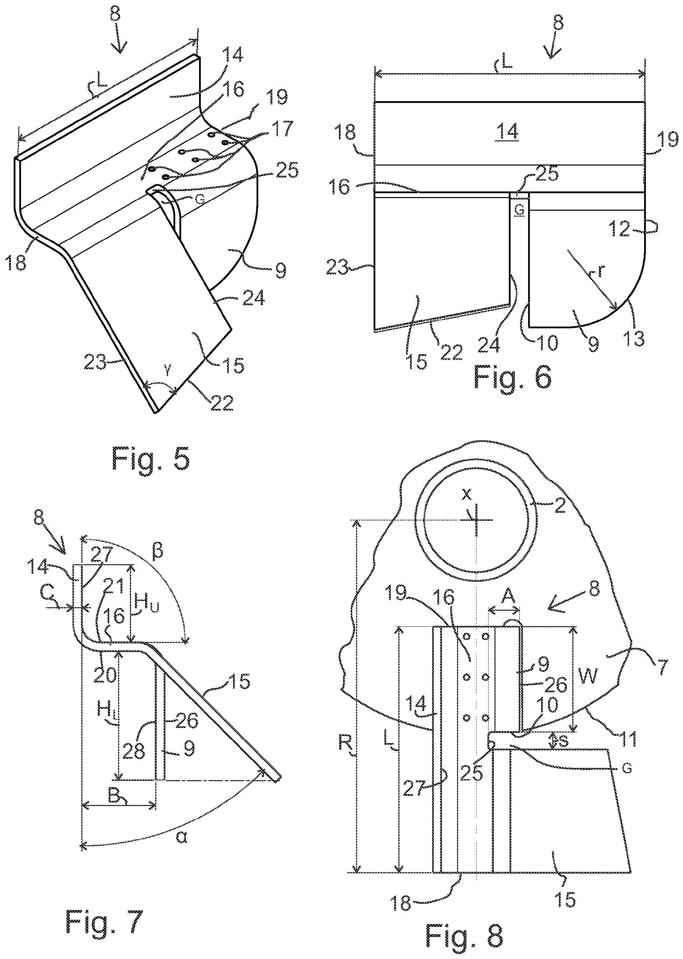

Referring to Figures 3 and 6, the vertical dispersion blade 9 has a straight vertical outer edge 10 close to a periphery 11 of the circular hub disc 7, an inner edge 12 which is close to the axis of rotation x and a rounded edge 13 curving with a radius r between the outer edge 10 and the inner edge 12. Referring to Figures 2, 3, 5, 6 and 7, an upper vertical dispersion blade 14 is located above the plane of the circular hub disc 7 and parallel to the radius of the circular hub disc. An inclined suspension blade 15 is located radially outside the periphery of the circular hub disc 7, at a first angle α in relation to the vertical direction and below the plane of the circular hub disc The agitating blade 8 is one integral piece of metal plate, the lower vertical dispersion blade 9, the upper vertical dispersion blade 10 and the inclined suspension blade 15 being bent from a single metal plate blank.

Referring to Figures 2 to 5, the agitating blade 8 comprises a horizontal part 16 which is located between the upper vertical dispersion blade 14 and the lower vertical dispersion blade 9. Bolt holes 17 are arranged at the horizontal part 16 for attaching the agitating blade 8 to the circular hub disc 7 with bolted joints.

Referring to Figures 5 and 8, the agitating blade 8 has an outer end 18 and an inner end 19 which is at a closer distance to the central axis x than the outer end. The outer end 18 and the inner end 19 defining a length L of the agitating blade 8. The radial distance between the central axis x and the outer end 18 defines a radius R of the impeller 6, which is a half of the diameter D of the impeller. The length L of the agitating blade 8 is 0,35xD ± 0,05D.

Referring to Figure 7, the lower vertical dispersion blade 9 has a height H_{L} measured from a lower surface 20 of the horizontal part 16 which height H_{L} is 0,175xD ± 0,02D.

Referring to Figure 8, the lower vertical dispersion blade 9 has a width W which is 0,15xD ± 0,02D.

Referring to Figure 6, the radius r of the curving rounded edge 13 of the lower vertical dispersion blade 9 is 0,1xD ± 0,01D.

Referring to Figure 7, the first angle α of the inclined suspension blade 15 is 45° ± 5°.

Referring to Figures 5 and 8, the upper vertical dispersion blade 14 has a length L corresponding to the length L of the agitating blade 8.

Referring to Figure 7, the upper vertical dispersion blade 14 has a height H_{U} measured from an upper surface 21 of the horizontal part 16 which height H_{U} is 0,105xD ± 0,01xD.

Referring to Figure 7, the upper vertical dispersion blade 14 is at a second angle β to the upper surface 21 of the horizontal part 16, which second angle β is 90° ± 5°.

Referring to Figure 5, the inclined suspension blade 15 has a straight lower edge 22 which at a third angle γ to an outer edge 23 of the inclined suspension blade 15, said outer edge 23 coinciding with the outer end 18 of the agitating blade 8, and which third angle γ is 75° ± 5°. The inclined suspension blade 15 has a straight inner edge 24 which is parallel to the outer edge 23.

As shown in Figures 5 to 8, a gap G is defined between the inner edge 24 of the inclined suspension blade 15 and the outer edge 10 of the lower vertical dispersion blade 10. The gap G has a width s of 0,025xD ± 0,005xD. The closed end 25 of the gap G is located at a lateral distance A, which is 0,045xD ± 0,005xD, from a first trailing face 26 of the lower vertical dispersion blade 9.

As seen in Figure 7, the upper vertical dispersion blade 14 has a second trailing face 27 and the lower vertical dispersion blade 9 has a front face 28 which is parallel to the second trailing face 27, and that the lateral distance B between the second trailing face 27 and the front face 28 is 0,1xD ± 0,01xD. The metal plate of the agitating blade 8 has a thickness C which is 0,01xD + 0,01xD / -0,005xD.

As the above dimensions are all defined as being proportional to the diameter D of the impeller 6 (see Figure 4) they are scalable according to the above disclosed principles.

While the present inventions have been described in connection with a number of exemplary embodiments, and implementations, the present inventions are not so limited, but rather cover various modifications, and equivalent arrangements, which fall within the purview of prospective claims.

## Claims

1. An agitator impeller arrangement (1) for dispersing gas into a slurry of solids and liquid, the arrangement comprising
- a rotating shaft (2) having an upper end (3) which is connected to a rotating means (4), and a free lower end (5), the rotating shaft having a central axis (x) which is the axis of rotation, and
- an impeller (6) connected coaxially and centrally in relation to the central axis (x) to the lower end (5) of the rotating shaft (2), said impeller (6) having
-- a horizontal circular hub disc (7) connected centrally and horizontally to the lower end (5) of the rotating shaft (2), and
-- a plurality of agitating blades (8) mounted radially and equally spaced to the circular hub disc (7), each agitating blade (8) comprising
+ a lower vertical dispersion blade (9) located below the plane of the circular hub disc (7) parallel to the radius of the circular hub disc, said vertical dispersion blade (9) having a straight vertical outer edge (10) being close to a periphery (11) of the circular hub disc (7), an inner edge (12) which is close to the axis of rotation (x)) and a rounded edge (13) curving with a radius r between the outer edge and the inner edge,
+ an upper vertical dispersion blade (14) located above the plane of the circular hub disc (7) and parallel to the radius of the circular hub disc, and
+ an inclined suspension blade (15) located radially outside the periphery of the circular hub disc (7), at a first angle (α) in relation to the vertical direction and below the plane of the circular hub disc, **characterized in that** the agitating blade (8) is one integral piece of metal plate, the lower vertical dispersion blade (9), the upper vertical dispersion blade (14) and the inclined suspension blade (15) being bent from a single metal plate blank.

2. The agitator impeller arrangement according to claim 1, **characterized in that** the agitating blade (8) comprises
- a horizontal part (16) located between the upper vertical dispersion blade (14) and the lower vertical dispersion blade (9), and
- bolt holes (17) arranged at the horizontal part (16) for attaching the agitating blade (8) to the circular hub disc (7) with bolted joints.

3. The agitator impeller arrangement according to claim 1 or 2, **characterized in that** the agitating blade (8) has an outer end (18) and an inner end (19) which is at a closer distance to the central axis (x) than the outer end, the outer end and the inner end defining a length (L) of the agitating blade; that the radial distance between the central axis (x) and the outer end (18) defines a radius (R) of the impeller (6), which is a half of the diameter (D) of the impeller; and that the length (L) of the agitating blade (8) is 0,35xD ± 0,05D.

4. The agitator impeller arrangement according to any one of the claims 1 to 3, **characterized in that** the lower vertical dispersion blade (9) has a height (H_{L}) measured from a lower surface (20) of the horizontal part (16) which height (H_{L}) is 0,175xD ± 0,02D, wherein D is the diameter (D) of the impeller (6) .

5. The agitator impeller arrangement according to any one of the claims 1 to 4, **characterized in that** the lower vertical dispersion blade (9) has a width W which is 0,15xD ± 0,02D, wherein D is the diameter (D) of the impeller (6).

6. The agitator impeller arrangement according to any one of the claims 1 to 5, **characterized in that** the radius r of the curving rounded edge (13) of the lower vertical dispersion blade (9) is 0,1xD ± 0,01D, wherein D is the diameter (D) of the impeller (6) .

7. The agitator impeller arrangement according to any one of the claims 1 to 6, **characterized in that** the first angle (α) of the inclined suspension blade (15) is 45° ± 5°.

8. The agitator impeller arrangement according to any one of the claims 1 to 7, **characterized in that** the upper vertical dispersion blade (14) has a length (L) corresponding to the length (L) of the agitating blade (8).

9. The agitator impeller arrangement according to any one of the claims 1 to 8, **characterized in that** the upper vertical dispersion blade (14) has a height (H_{U}) measured from an upper surface (21) of the horizontal part (16) which height (H_{U}) is 0,105xD ± 0,01xD, wherein D is the diameter (D) of the impeller (6) .

10. The agitator impeller arrangement according to claim 9, **characterized in that** the upper vertical dispersion blade (14) is at a second angle (β) to the upper surface (21) of the horizontal part (16), which second angle (β) is 90° ± 5°.

11. The agitator impeller arrangement according to any one of the claims 1 to 10, **characterized in that** the inclined suspension blade (15) has a straight lower edge (22) which at a third angle (γ) to an outer edge (23) of the inclined suspension blade (15), said outer edge (23) coinciding with the outer end (18) of the agitating blade (8), and which third angle (γ) is 75° ± 5°.

12. The agitator impeller arrangement according to any one of the claims 1 to 11, **characterized in that** the inclined suspension blade (15) has a straight inner edge (24) which is parallel to the outer edge (23) .

13. The agitator impeller arrangement according to claim 12, **characterized in that** a gap (G) is defined between the inner edge (24) of the inclined suspension blade (15) and the outer edge (10) of the lower vertical dispersion blade (10), said gap (G) having a width (s) of 0,025xD ± 0,005xD, and a closed end (25) located at a lateral distance A which is 0,045xD ± 0,005xD from a first trailing face (26) of the lower vertical dispersion blade (9), wherein D is the diameter (D) of the impeller (6).

14. The agitator impeller arrangement according to any one of the claims 1 to 13, **characterized in that** the upper vertical dispersion blade (14) has a second trailing face (27) and the lower vertical dispersion blade (9) has a front face (28) which is parallel to the second trailing face (27), and that the lateral distance B between the second trailing face (27) and the front face (28) is 0,1xD ± 0,01xD, wherein D is the diameter (D) of the impeller (6).

15. The agitator impeller arrangement according to any one of the claims 1 to 14, **characterized in that** the metal plate of the agitating blade (8) has a thickness (C) which is 0,01xD + 0,01xD / -0,005xD.

## Patentansprüche

1. Rührwerksimpelleranordnung (1) zum Dispergieren von Gas in einen Brei aus Feststoffen und Flüssigkeit, wobei die Anordnung aufweist
- einen rotierenden Schaft (2) mit einem oberen Ende (3), welches mit einem rotierenden Mittel (4) verbunden ist, und einem freien unteren Ende (5), wobei der rotierende Schaft eine zentrale Achse (x) aufweist, welche die Rotationsachse ist, und
- einen Impeller (6), der in Relation zu der zentralen Achse (x) mit dem unterem Ende (5) des rotierenden Schaftes (2) koaxial und zentral verbunden ist, wobei der Impeller (6) aufweist
-- eine horizontale ringförmige Nabenscheibe (7), die zentral und horizontal mit dem unterem Ende (5) des rotierenden Schaftes (2) verbunden ist, und
-- eine Mehrzahl von Rührblättern (8), die radial und gleichmäßig beabstandet an der ringförmigen Nabenscherbe (7) angebracht sind, wobei jedes Rührblatt (8) aufweist
+ ein unteres vertikales Dispersionsblatt (9) unterhalb der Ebene der ringförmigen Nabenscheibe (7) und parallel zu dem Radius der ringförmigen Nabenscheibe (7) angeordnet, wobei das vertikale Dispersionsblatt (9) eine gerade vertikale äußere Kante (10) aufweist, die sich in der Nähe einer Peripherie (11) der ringförmigen Nabenscheibe (7) befindet, eine innere Kante (12), welche sich in der Nähe der Rotationsachse (x) befindet, und eine abgerundete Kante (13), die sich mit einem Radius r zwischen der äußeren Kante und der inneren Kante krümmt,
+ ein oberes vertikales Dispersionsblatt (14), angeordnet oberhalb der Ebene der ringförmigen Nabenscheibe (7), und parallel zu dem Radius der ringförmigen Nabenscheibe, und
+ ein schräg angeordnetes Suspensionsblatt (15), angeordnet radial außerhalb der Peripherie der ringförmigen Nabenscheibe (7), in einem ersten Winkel (α) in Relation zu der vertikalen Richtung und unterhalb der Ebene der ringförmigen Nabenscheibe, **dadurch gekennzeichnet, dass** das Rührblatt (8) ein integrales Stück einer Metallplatte ist, wobei das untere vertikale Dispersionsblatt (9), das obere vertikale Dispersionsblatt (14) und das schräg angeordnete Suspensionsblatt (15) aus einem einzigen Metallplattenrohling gebogen sind.

2. Rührwerksimpelleranordnung nach Anspruch (1), **dadurch gekennzeichnet, dass** das Rührblatt (8) aufweist
- einen horizontalen Teil (16), angeordnet zwischen dem oberen vertikalen Dispersionsblatt (14) und dem unteren vertikalen Dispersionsblatt (9), und
- Bolzenlöcher (17), die zum Anbringen des Rührblattes (8) an die ringförmige Nabenscheibe (7) mittels Schraubverbindungen an dem horizontalen Teil (16) angeordnet sind.

3. Rührwerksimpelleranordnung nach den Ansprüchen 1 oder 2, **dadurch gekennzeichnet, dass** das Rührblatt (8) ein äußeres Ende (18) und ein inneres Ende (19) aufweist, welches in einem kürzeren Abstand zu der zentralen Achse (x) angeordnet ist als das äußere Ende, wobei das äußere Ende und das innere Ende eine Länge (L) des Rührblattes definieren; dass der radiale Abstand zwischen der zentralen Achse (x) und dem äußeren Ende (18) einen Radius (R) des Impellers (6) definiert, welcher eine Hälfte des Durchmessers (D) des Impellers beträgt; und das die Länge (L) des Rührblattes (8) 0,35xD ± 0,05D beträgt.

4. Rührwerksimpelleranordnung nach einem der Ansprüche 1 bis 3, **dadurch gekennzeichnet, dass** das untere vertikale Dispersionsblatt (9) eine Höhe (H_{L}) aufweist, gemessen von einer unteren Oberfläche (20) des horizontalen Teils (16), welche Höhe (H_{L}) 0,175xD ± 0,02D beträgt, wobei D der Durchmesser (D) des Impellers (6) ist.

5. Rührwerksimpelleranordnung nach einem der Ansprüche 1 bis 4, **dadurch gekennzeichnet, dass** das untere vertikale Dispersionsblatt (9) eine Breite W aufweist, welche 0,15xD ± 0,02D beträgt, wobei D der Durchmesser (D) des Impellers (6) ist.

6. Rührwerksimpelleranordnung nach einem der Ansprüche 1 bis 5, **dadurch gekennzeichnet, dass** der Radius r der gekrümmten abgerundeten Kante (13) des unteren vertikalen Dispersionsblattes (9) 0,1xD ± 0,01D beträgt, wobei (D) der Durchmesser des Impellers (6) ist.

7. Rührwerksimpelleranordnung nach einem der Ansprüche 1 bis 6, **dadurch gekennzeichnet, dass** der erste Winkel (α) des schräg angeordneten Suspensionsblattes (15) 45° ± 5° beträgt.

8. Rührwerksimpelleranordnung nach einem der Ansprüche 1 bis 7, **dadurch gekennzeichnet, dass** das obere vertikale Dispersionsblatt (14) eine Länge (L) aufweist, die der Länge (L) des Rührblattes (8) entspricht.

9. Rührwerksimpelleranordnung nach einem der Ansprüche 1 bis 8, **dadurch gekennzeichnet, dass** das obere vertikale Dispersionsblatt (14) eine Höhe (Hu) aufweist, gemessen von einer unteren Oberfläche (21) des horizontales Teils (16), welche Höhe (Hu) 0,105xD ± 0,01xD beträgt, wobei D der Durchmesser (D) des Impellers (6) ist.

10. Rührwerksimpelleranordnung nach Anspruch 9, **dadurch gekennzeichnet, dass** sich das obere vertikale Dispersionsblatt (14) in einem zweiten Winkel (β) bezüglich der oberen Oberfläche (21) des horizontalen Teils (16) befindet, wobei der zweite Winkel (β) 90° ± 5° beträgt.

11. Rührwerksimpelleranordnung nach einem der Ansprüche 1 bis 10, **dadurch gekennzeichnet, dass** das schräg angeordnete Suspensionsblatt (15) eine gerade untere Kante (22) aufweist, welche sich in einem dritten Winkel (γ) zu einer äußeren Kante (23) des schrräg angeordneten Suspensionsblattes (15) befindet, wobei die äußere Kante (23) mit dem äußeren Ende (18) des Rührblattes (8) zusammenfällt, und wobei der dritte Winkel (γ) 75° ± 5° beträgt.

12. Rührwerksimpelleranordnung nach einem der Ansprüche 1 bis 11, **dadurch gekennzeichnet, dass** das schräg angeordnete Suspensionblatt (15) eine gerade innere Kante (24) aufweist, welche parallel zu der äußeren Kante (23) ist.

13. Rührwerksimpelleranordnung nach Anspruch 12, **dadurch gekennzeichnet, dass** eine Lücke (G) zwischen der inneren Kante (24) des schräg angeordneten Suspensionsblattes (15) und der äußeren Kante (10) des unteren vertikalen Dispersionsblattes (10) definiert ist, wobei die Lücke (G) eine Breite (s) von 0,025xD ± 0,005xD aufweist, und wobei ein geschlossenes Ende (25) in einem lateralen Abstand A angeordnet ist, welcher 0,045xD ± 0,005xD von einer ersten hinteren Seite (26) des unteren vertikalen Dispersionsblattes (9) beträgt, wobei D der Durchmesser (D) des Impellers (6) ist.

14. Rührwerksimpelleranordnung nach einem der Ansprüche 1 bis 13, **dadurch gekennzeichnet, dass** das obere vertikale Dispersionblatt (14) eine zweite hintere Seite (27) und das untere vertikale Dispersionsblatt (9) eine Vorderseite (28) aufweist, welche parallel zu der zweiten hinteren Seite (27) ist, und das der laterale Abstand B zwischen der zweiten hinteren Seite (27) und der Vorderseite (28) 0,1xD ± 0,01xD beträgt, wobei D der Durchmesser (D) des Impellers (6) ist.

15. Rührwerksimpelleranordnung nach einem der Ansprüche 1 bis 14, **dadurch gekennzeichnet, dass** die Metallplatte des Rührblattes (8) eine Dicke (C) aufweist, welche 0,01xD + 0,01xD / -0,005xD beträgt.

## Revendications

1. Agencement de roue d'agitateur (1) destiné à disperser un gaz en une boue de solides et liquide, l'agencement comprenant
- un arbre tournant (2) ayant une extrémité supérieure (3) qui est raccordée à un moyen tournant (4), et une extrémité inférieure libre (5), l'arbre tournant ayant un axe central (x) qui est l'axe de rotation, et
- une roue (6) raccordée coaxialement et centralement par rapport à l'axe central (x) à l'extrémité inférieure (5) de l'arbre tournant (2), ladite roue (6) ayant
-- un disque de moyeu circulaire horizontal (7) raccordé centralement et horizontalement à l'extrémité inférieure (5) de l'arbre tournant (2), et
-- une pluralité de pales agitatrices (8) montées radialement et espacées de façon égale par rapport au disque de moyeu circulaire (7), chaque pale agitatrice (8) comprenant
+ une pale de dispersion verticale inférieure (9) située sous le plan du disque de moyeu circulaire (7) parallèle au rayon du disque de moyeu circulaire, ladite pale de dispersion verticale (9) ayant un bord externe vertical droit (10) proche d'une périphérie (11) du disque de moyeu circulaire (7), un bord interne (12) qui est proche de l'axe de rotation (x) et un bord arrondi (13) se courbant avec un rayon r entre le bord externe et le bord interne,
+ une pale de dispersion verticale supérieure (14) située au-dessus du plan du disque de moyeu circulaire (7) et parallèle au rayon du disque de moyeu circulaire, et
+ une pale de suspension inclinée (15) située radialement à l'extérieur de la périphérie du disque de moyeu circulaire horizontal (7), à un premier angle (α) par rapport à la direction verticale et sous le plan du disque de moyeu circulaire, **caractérisé en ce que** la pale agitatrice (8) est une pièce d'un seul tenant de tôle de métal, la pale de dispersion verticale inférieure (9), la pale de dispersion verticale supérieure (14) et la pale de suspension inclinée (15) étant cintrées à partir d'un seul flan de tôle de métal.

2. Agencement de roue d'agitateur selon la revendication 1, **caractérisé en ce que** la pale agitatrice (8) comprend
- une partie horizontale (16) située entre la pale de dispersion verticale supérieure (14) et la pale de dispersion verticale inférieure (9), et
- des trous de boulon (17) agencés au niveau de la partie horizontale (16) pour attacher la pale agitatrice (8) au disque de moyeu circulaire (7) avec des liaisons boulonnées.

3. Agencement de roue d'agitateur selon la revendication 1 ou 2, **caractérisé en ce que** la pale agitatrice (8) a une extrémité externe (18) et une extrémité interne (19) qui est à une distance plus proche de l'axe central (x) que l'extrémité externe, l'extrémité externe et l'extrémité interne définissant une longueur (L) de la pale agitatrice ; et **en ce que** la distance radiale entre l'axe central (x) et l'extrémité externe (18) définit un rayon (R) de la roue (6), qui est une moitié du diamètre (D) de la roue ; et **en ce que** la longueur (L) de la pale agitatrice (8) est de 0,35 x D ± 0,05 D.

4. Agencement de roue d'agitateur selon l'une quelconque des revendications 1 à 3, **caractérisé en ce que** la pale de dispersion verticale inférieure (9) a une hauteur (H_{L}) mesurée depuis une surface inférieure (20) de la partie horizontale (16), laquelle hauteur (H_{L}) est de 0,175 x D ± 0,02 D, D étant le diamètre (D) de la roue (6).

5. Agencement de roue d'agitateur selon l'une quelconque des revendications 1 à 4, **caractérisé en ce que** la pale de dispersion verticale inférieure (9) a une largeur W qui est de 0,15 x D ± 0,02 D, D étant le diamètre (D) de la roue (6).

6. Agencement de roue d'agitateur selon l'une quelconque des revendications 1 à 5, **caractérisé en ce que** le rayon r du bord arrondi de courbure (13) de la pale de dispersion verticale inférieure (9) est de 0,1 x D ± 0,01 D, D étant le diamètre (D) de la roue (6).

7. Agencement de roue d'agitateur selon l'une quelconque des revendications 1 à 6, **caractérisé en ce que** le premier angle (α) de la pale de suspension inclinée (15) est de 45° ± 5°.

8. Agencement de roue d'agitateur selon l'une quelconque des revendications 1 à 7, **caractérisé en ce que** la pale de dispersion verticale supérieure (14) a une longueur (L) correspondant à la longueur (L) de la pale agitatrice (8).

9. Agencement de roue d'agitateur selon l'une quelconque des revendications 1 à 8, **caractérisé en ce que** la pale de dispersion verticale supérieure (14) a une hauteur (H_{U}) mesurée depuis une surface supérieure (21) de la partie horizontale (16), laquelle hauteur (H_{U}) est de 0,105 x D ± 0,01 x D, D étant le diamètre (D) de la roue (6).

10. Agencement de roue d'agitateur selon la revendication 9, **caractérisé en ce que** la pale de dispersion verticale supérieure (14) est à un deuxième angle (β) par rapport à la surface supérieure (21) de la partie horizontale (16), lequel deuxième angle (β) est de 90° ± 5°.

11. Agencement de roue d'agitateur selon l'une quelconque des revendications 1 à 10, **caractérisé en ce que** la pale de suspension inclinée (15) a un bord inférieur droit (22) qui fait un troisième angle (γ) par rapport à un bord externe (23) de la pale de suspension inclinée (15), ledit bord externe (23) coïncidant avec l'extrémité externe (18) de la pale agitatrice (8), et lequel troisième angle (γ) est de 75° ± 5°.

12. Agencement de roue d'agitateur selon l'une quelconque des revendications 1 à 11, **caractérisé en ce que** la pale de suspension inclinée (15) a un bord interne droit (24) qui est parallèle au bord externe (23).

13. Agencement de roue d'agitateur selon la revendication 12, **caractérisé en ce qu'**un écartement (G) est défini entre le bord interne (24) de la pale de suspension inclinée (15) et le bord externe (10) de la pale de dispersion verticale inférieure (10), ledit écartement (G) ayant une largeur (s) de 0,025 x D ± 0,005 x D, et une extrémité fermée (25) située à une distance latérale A qui est de 0,045 x D ± 0,005 x D d'une première face de fuite (26) de la pale de dispersion verticale inférieure (9), D étant le diamètre (D) de la roue (6).

14. Agencement de roue d'agitateur selon l'une quelconque des revendications 1 à 13, **caractérisé en ce que** la pale de dispersion verticale supérieure (14) a une seconde face de fuite (27) et la pale de dispersion verticale inférieure (9) comporte une face avant (28) qui est parallèle à la seconde face de fuite (27), et **en ce que** la distance latérale B entre la seconde face de fuite (27) et la face avant (28) est de 0,1 x D ± 0,01 x D, D étant le diamètre (D) de la roue (6).

15. Agencement de roue d'agitateur selon l'une quelconque des revendications 1 à 14, **caractérisé en ce que** la tôle de métal de la pale agitatrice (8) a une épaisseur (C) qui est de 0,01 x D + 0,01 x D/-0,005 x D.
